# EUROPEAN PATENT APPLICATION

(11) **EP 4 575 061 A1**
(43) Date of publication of application: **25.06.2025**
(21) Application number: 23863198.0
(22) Date of filing: 06.09.2023
(51) Int. Cl.: D06C 23/04, B32B 5/26, D06N 3/00

(54) **FABRIC AND METHOD FOR PRODUCING FABRIC**

(30) Priority: 06.09.2022 JP 2022141137
(71) Applicant: Moritsune Co., Ltd., Kahoku-shi, Ishikawa 929-1215 (JP); Sanyo Trading Co., Ltd., Tokyo 101-0054 (JP)
(72) Inventor: MORI Tsunehide, Kahoku-shi, Ishikawa 929-1215 (JP); AOKI Takashi, Tokyo 101-0054 (JP); HIGASHI Hirokazu, Tokyo 101-0054 (JP); NAKAMURA Hiroyuki, Tokyo 101-0054 (JP)
(74) Representative: Mathys & Squire
(86) International application number: PCT/JP2023/032477
(87) International publication number: WO 2024/053660

(57) **Abstract**

There is provided a leather-like fabric including: a leather-like front surface layer for which at least one of polyester, nylon, acrylic, linen, cotton, silk, rayon, or wool, is used; and a rear surface layer which is adhered to a rear surface of the front surface layer, in which the front surface layer and the rear surface layer are embossed. There is also provided a method of producing a leather-like fabric, the method including: bonding a front surface layer and a rear surface layer together; and embossing the front surface layer in a state in which the front surface layer and the rear surface layer are bonded to each other, in which the front surface layer is a leather-like layer for which polyester is used.

## Description

### BACKGROUND

### 1. TECHNICAL FIELD

The present invention relates to a fabric and a method of producing a fabric.

### 2. RELATED ART

Patent Document 1 discloses an embossed "leather-like non-woven fabric".

### Prior Art Documents

### Patent Document

Patent Document 1: Japanese Patent Application Publication No. H11-241277

There is provided a leather-like fabric with a higher quality.

### GENERAL DISCLOSURE

In a first aspect of the present invention, there is provided a leather-like fabric including: a leather-like front surface layer for which at least one of polyester, nylon, acrylic, linen, cotton, silk, rayon, or wool, is used; and a rear surface layer which is adhered to a rear surface of the front surface layer, in which the front surface layer and the rear surface layer are embossed.

In the fabric, an embossing depth of the fabric may be 50 µm or more and 400 µm or less.

In any leather-like fabric described above, the rear surface layer may be a non-woven fabric for which polyester is used.

In any leather-like fabric described above, a thickness of the rear surface layer may be greater than a thickness of the front surface layer.

Any leather-like fabric described above may include an adhesive layer for adhering the front surface layer and the rear surface layer together.

In any leather-like fabric described above, a material of the adhesive layer may contain polyester.

In any leather-like fabric described above, a melting point of the adhesive layer may be lower than melting points of the front surface layer and the rear surface layer.

In a second aspect of the present invention, there is also provided a method of producing a leather-like fabric, the method including: bonding a front surface layer and a rear surface layer together; and embossing the front surface layer in a state in which the front surface layer and the rear surface layer are bonded to each other, in which the front surface layer is a leather-like layer for which polyester is used.

In any method of producing a leather-like fabric described above, the embossing may include using an embossing machine which uses a mold of a roll shape or a plate shape, to perform surface heating on the front surface layer.

In any method of producing a leather-like fabric described above, a heating temperature for the embossing may be lower than a glass transition temperature of the front surface layer.

In any method of producing a leather-like fabric described above, the embossing may include plastically deforming the front surface layer.

In any method of producing a leather-like fabric described above, the embossing may include elastically deforming the rear surface layer.

Any method of producing a leather-like fabric described above, may include expanding the rear surface layer, after embossing the front surface layer.

In any method of producing a leather-like fabric described above, the expanding the rear surface layer may include heating from a rear surface side of the rear surface layer.

The summary clause does not necessarily describe all necessary features of the embodiments of the present invention. The present invention may also be a sub-combination of the features described above.

### BRIEF DESCRIPTION OF THE DRAWINGS

Fig. 1 is a photograph of a front surface of a fabric 100.
Fig. 2A is a schematic diagram of a cross section of the fabric 100 before embossing.
Fig. 2B is a schematic diagram of a cross section of the fabric 100 after the embossing.
Fig. 2C shows an example of a flowchart for producing the fabric 100.
Fig. 3 shows an example of a configuration of a warp yarn 10.
Fig. 4 shows a modified example of the warp yarn 10.
Fig. 5 shows an example of a method of producing the fabric 100.
Fig. 6 shows a method of producing a fabric 500 of a comparative example.
Fig. 7 shows a modified example of the method of producing the fabric 100.

### DESCRIPTION OF EXEMPLARY EMBODIMENTS

Hereinafter, the invention will be described through embodiments of the invention, but the following embodiments do not limit the invention according to claims. In addition, not all of the combinations of features described in the embodiments are essential to the solving means of the invention.

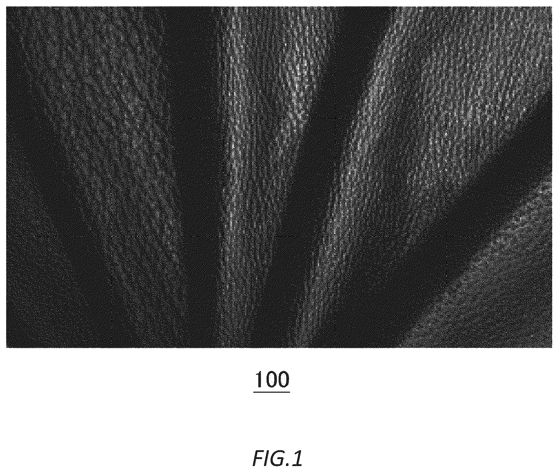

Fig. 1 is a photograph of a front surface of a fabric 100. The fabric 100 is a fabric for which at least one of polyester, nylon, acrylic, linen, cotton, silk, rayon, or wool, is used; and is a leather-like fabric which is embossed. The fabric 100 may have unevenness and gloss as in genuine or synthetic leather.

The leather-like fabric 100 for which polyester is used can reduce a mass by 50% or more in comparison with a fabric for which genuine leather or polyvinyl chloride (PVC) is used. In addition, unlike a fabric for which genuine leather or PVC is used, the fabric 100 does not easily become hot in the summer, and does not easily become cold in the winter. The fabric 100 can be finished by using a steam iron to enhance a finishing property. By constituting the fabric 100 by polyester alone, it is possible to enhance recyclability.

The fabric 100 may be used for a vehicle seat cover which requires high strength, wrinkle resistance, flame retardancy, and the like. The fabric 100 may meet at least one of evaluation criteria of JIS L1096, L1093, L1092, L1076, L0860, L0849, L0844, or L0842. Note that a use of the fabric 100 is not particularly limited.

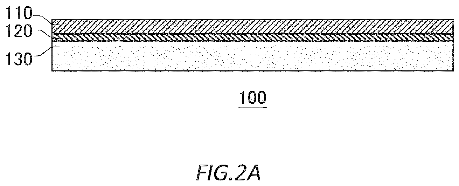

Fig. 2A is a schematic diagram of a cross section of the fabric 100 before embossing. The fabric 100 includes a front surface layer 110, an adhesive layer 120, and a rear surface layer 130.

The front surface layer 110 is a leather-like layer for which polyester is used. The front surface layer 110 has a leather-like design realized by being embossed. The front surface layer 110 may be a woven fabric for which polyester is used as described below. The front surface layer 110 is bonded to the rear surface layer 130. A thickness of the front surface layer 110 may be 0.3 mm or more and 1.5 mm or less. For example, the thickness of the front surface layer 110 is 0.8 mm.

The adhesive layer 120 adheres the front surface layer 110 and the rear surface layer 130 together. A material of the adhesive layer 120 may contain polyester. Note that the adhesive layer 120 may contain polyester having a composition different from those of the front surface layer 110 and the rear surface layer 130. A melting point of the adhesive layer 120 may be lower than melting points of the front surface layer 110 and the rear surface layer 130. By heating the fabric 100 to melt the adhesive layer 120, it is possible to adhere the front surface layer 110 and the rear surface layer 130 together. The melting points of the front surface layer 110 and the rear surface layer 130 may be the same as each other, or may be different from each other. In an example, the melting points of the front surface layer 110 and the rear surface layer 130 are 220°C, and the melting point of the adhesive layer 120 is 110°C. It should be noted that a method of bonding the front surface layer 110 and the rear surface layer 130 together is not limited to the method of using the adhesive layer 120.

The rear surface layer 130 is adhered to a rear surface of the front surface layer 110. In the present example, the rear surface layer 130 is bonded to the rear surface of the front surface layer 110 by using the adhesive layer 120. The rear surface layer 130 may be a non-woven fabric for which polyester is used. The front surface layer 110 and the rear surface layer 130 may be constituted by the same material. By constituting each layer of the fabric 100 by the same material, recyclability is enhanced. A thickness of the rear surface layer 130 may be 1.0 mm or more and 20.0 mm or less. The thickness of the rear surface layer 130 may be greater than the thickness of the front surface layer 110. By forming the rear surface layer 130 to be thick, it is possible to form a deep embossment on the front surface layer 110.

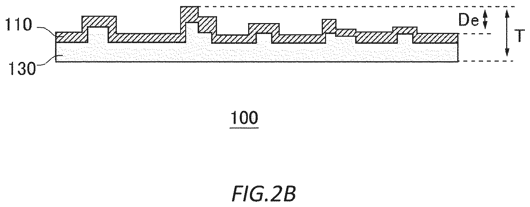

Fig. 2B is a schematic diagram of a cross section of the fabric 100 after the embossing. In the present example, for simplicity, the adhesive layer 120 is not shown. In the fabric 100 of the present example, the front surface layer 110 and the rear surface layer 130 are embossed.

The fabric 100 has unevenness formed by the embossing. In the present example, the rear surface layer 130 is bonded to the rear surface of the front surface layer 110; and by extending the embossing of the front surface layer 110 into the rear surface layer 130, it is possible to realize deep embossing. An embossing depth De of the fabric 100 may be 50 µm or more and 400 µm or less. The embossing depth De may be a maximum value of a difference between a protrusion portion and a recess portion in the embossed front surface layer 110.

Here, the front surface layer 110 may have a single yarn in which a single yarn deci-tex is 0.05 or more and 0.7 or less. In this way, by thinning the single yarn, rigidity of the single yarn is weakened, and it is possible to realize the deep embossing. In addition, by thinning the single yarn, it is possible to remove a fine line and realize a leather-like fabric with a high quality in which an unevenness expression is enhanced.

A thickness T of the fabric 100 after the embossing may be a thickness between the protrusion portion of the embossing and a rear surface of the rear surface layer 130. The thickness T of the fabric 100 may be 0.3 mm or more and 20.0 mm or less. As described below, in the fabric 100, by including a shrinkage yarn, it is possible to swell a yarn, and increase a thickness.

Each of the thickness of the front surface layer 110 and the thickness of the rear surface layer 130 may be the same as, or may be different from the thickness before the embossing. The thickness of the front surface layer 110 may be 0.3 mm or more and 1.5 mm or less. The thickness of the rear surface layer 130 may be 1.0 mm or more and 20.0 mm or less.

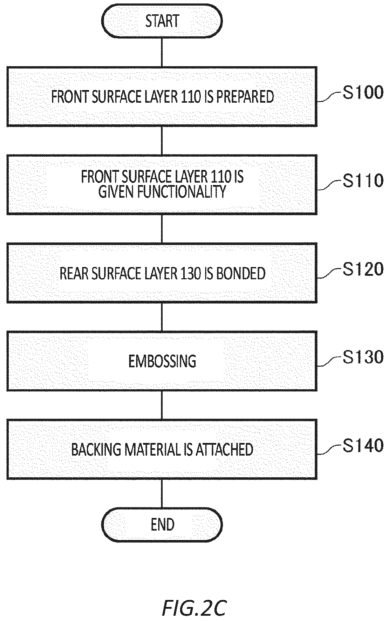

Fig. 2C shows an example of a flowchart for producing the fabric 100. The flowchart in the present example is an example of a method of producing the fabric 100, and the present invention is not limited to this. In step S100, a front surface layer 110 is prepared.

In step S110, the front surface layer 110 is given functionality by a water repellent process, a flame retardant process, or the like. For example, the front surface layer 110 may be given functionality such as water repellency, by using a functional agent such as a water repellent to perform a dipping process. The functional agent may have any functionality of the flame retardancy or the like. The front surface layer 110 may be impregnated with a plurality of functional agents in combination at one time. Step S110 may be omitted.

In step S120, the rear surface layer 130 is bonded to the rear surface of the front surface layer 110. The front surface layer 110 may be bonded to the rear surface layer 130 by the adhesive layer 120. The front surface layer 110 and the rear surface layer 130 are bonded together before the front surface layer 110 is embossed.

In step S130, the front surface layer 110 is embossed in a state in which the front surface layer 110 and the rear surface layer 130 are bonded to each other. By the embossing in a state in which the front surface layer 110 and the rear surface layer 130 are bonded to each other, it is possible to prevent the front surface layer 110 from breaking and to realize a greater embossing depth De. In addition, by adjusting a density and the thickness of the rear surface layer 130, it is possible to control the embossing depth De of the fabric 100. By decreasing the density and increasing the thickness of the rear surface layer 130, it becomes easy to cause the embossing depth De of the fabric 100 to be greater. Conversely, by increasing the density and decreasing the thickness of the rear surface layer 130, it becomes easy to cause the embossing depth De of the fabric 100 to be smaller.

In step S140, any backing material may be attached to the rear surface of the rear surface layer 130. For example, a cushioning material such as polyurethane is attached to the rear surface of the rear surface layer 130. The attachment of the backing material may be omitted. It should be noted that even in a case where the backing material is attached to the rear surface of the rear surface layer 130, when the backing material is peeled off, it is possible to easily recycle the fabric 100.

It should be noted that the front surface layer 110 may include a warp yarn and a weft yarn. By increasing a yarn density of the warp yarn, a gap in the fabric 100 is reduced, and it becomes difficult for the weft yarn to be seen. In this manner, the front surface layer 110 becomes flat, and it becomes easy to realize a leather-like fabric with a high quality. The yarn density is the number of single yarns per inch. The yarn density of the warp yarn may be 200 or more and 300 or less. For example, by blowing five or more front yarn in the weft yarn, it is possible to cause shrinkage to occur in a lateral direction, and increase the yarn density of the warp yarn.

Here, when the single yarn of the front surface layer 110 is thinned, there is a risk that the yarn breakage may occur due to the embossing. In the present example, by increasing the yarn density of the warp yarn and increasing a total number of yarns, even when the single yarn of the front surface layer 110 is thinned, it is possible to provide the front surface layer 110 in which an embossing pressure is dispersed to make it difficult for the yarn breakage to occur.

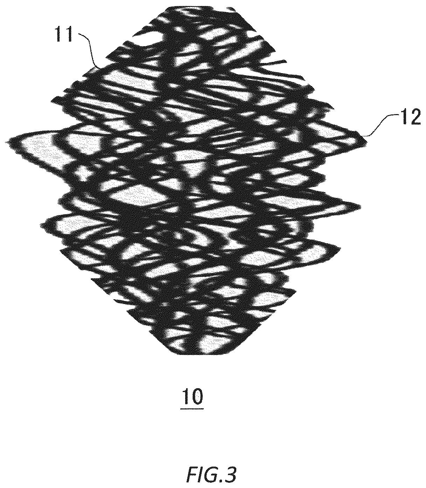

Fig. 3 shows an example of a configuration of a warp yarn 10. The warp yarn 10 in the present example has a first shrinkage yarn 11 which is predetermined, and a second shrinkage yarn 12 which is different from the first shrinkage yarn 11. In the warp yarn 10 of the present example, the first shrinkage yarn 11 and the second shrinkage yarn 12 are mixed. That is, the first shrinkage yarn 11 and the second shrinkage yarn 12 are mixed together to constitute one warp yarn 10. The first shrinkage yarn 11 and the second shrinkage yarn 12 may have heat-shrinking properties different from each other. The present example has described the case where the warp yarn 10 includes the shrinkage yarn; however, the shrinkage yarn may not necessarily be included.

In the warp yarn 10, by having the shrinkage yarn, a crimp is spread in the lateral direction, and thus it is possible to eliminate the fine line. In the warp yarn 10 of the present example, by using the shrinkage yarns which are different from each other, such as the first shrinkage yarn 11 and the second shrinkage yarn 12, it is possible to make it more difficult for the fine line to be seen. The warp yarn 10 may use three or more shrinkage yarn. In the fabric 100, by including a shrinkage yarn, it is possible to swell a yarn, and increase a thickness. By including the shrinkage yarn, it is possible to increase a void in the fabric 100, making it easy to press the fabric 100 with a mold, and making it easy to create unevenness by the embossing.

It should be noted that by adjusting crimps of the first shrinkage yarn 11 and the second shrinkage yarn 12, it is possible to arbitrarily adjust front surface gloss of the fabric 100. In this way, in a view of the front surface gloss and the embossing of the fabric 100, the warp yarn 10 including any shrinkage yarn may be selected. Similarly, for the weft yarn, a plurality of shrinkage yarns different from each other may be used.

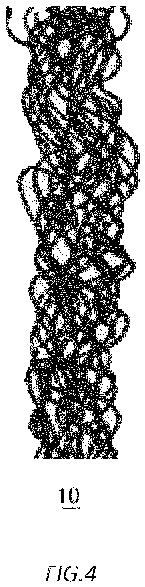

Fig. 4 shows a modified example of the warp yarn 10. Unlike the warp yarn 10 of Fig. 3, the warp yarn 10 does not include a plurality of shrinkage yarn. The warp yarn 10 may not include the shrinkage yarn, or may include only the shrinkage yarn of a single type.

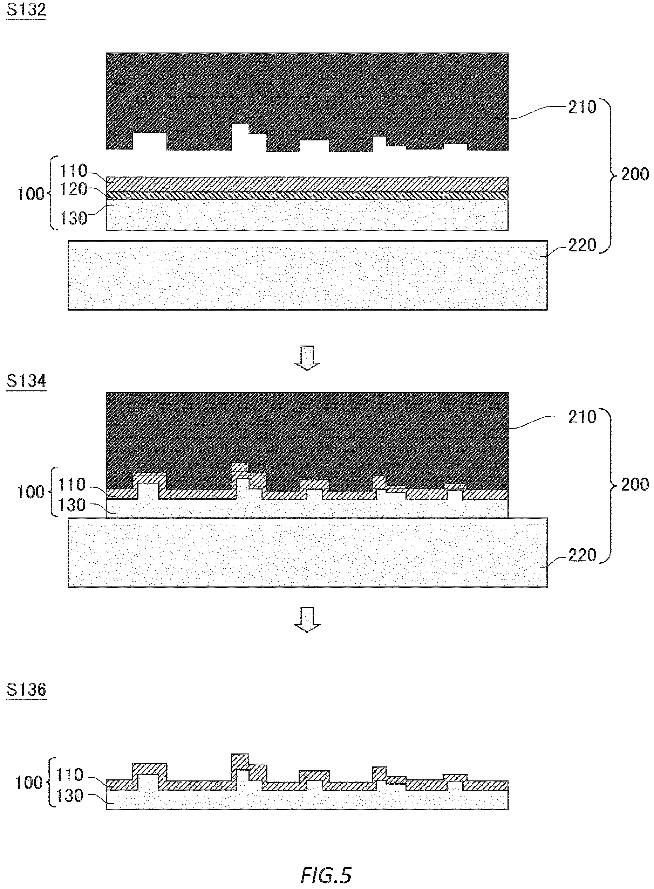

Fig. 5 shows an example of a method of producing the fabric 100. The present example shows an example of the embossing step in step S130 of Fig. 2C. In the present example, an embossing machine 200 is used to emboss the fabric 100. The embossing machine 200 includes a mold 210 and a stand 220.

In step S132, the leather-like fabric 100 is prepared. The prepared fabric 100 is arranged on the stand 220. The mold 210 may be arranged above the stand 220. The mold 210 may be a mold of a roll shape or a plate shape having unevenness in accordance with an embossing pattern that is applied to the fabric 100. The mold 210 may be heated to emboss the fabric 100. A heating temperature for the embossing by using the mold 210 may be lower than a glass transition temperature of the front surface layer 110. The glass transition temperatures of the front surface layer 110 and the rear surface layer 130 may be the same as each other. The mold 210 may have various shapes or depths according to dimensions and the like of the protrusions and the recesses of the embossments. When the mold 210 of the roll shape is used, the embossing depth De may be controlled by adjusting conditions such as a temperature of the mold 210, a pressure, and a conveyor speed. When the mold 210 of the plate shape is used, the embossing depth De may be controlled by adjusting conditions such as a temperature of the mold 210, a pressure, and a holding time during the process.

In step S134, the fabric 100 is embossed by the mold 210. In the present example, the fabric 100 is embossed in a state in which the rear surface layer 130 is adhered to the rear surface of the front surface layer 110. In this manner, the embossing depth De of the fabric 100 may be 50 µm or more and 400 µm or less. When the fabric 100 is embossed, the rear surface layer 130 may be elastically deformed. By elastically deforming the rear surface layer 130 without a plastic deformation, it is possible to expand the rear surface layer 130 in a step after the embossing. The front surface layer 110 may be plastically deformed by the embossing.

The embossing machine 200 uses the mold 210 to perform surface heating on the front surface layer 110. Here, the surface heating refers to heating a surface in a wider range, rather than applying a high frequency wave to a fabric to process a part of the fabric as in using a high frequency welder.

In step S136, the embossed fabric 100 is taken out from the embossing machine 200. By the embossing in a state in which the rear surface layer 130 is adhered to the rear surface of the front surface layer 110, the fabric 100 of the present example has a leather-like texture with a high quality in which an unevenness expression is enhanced.

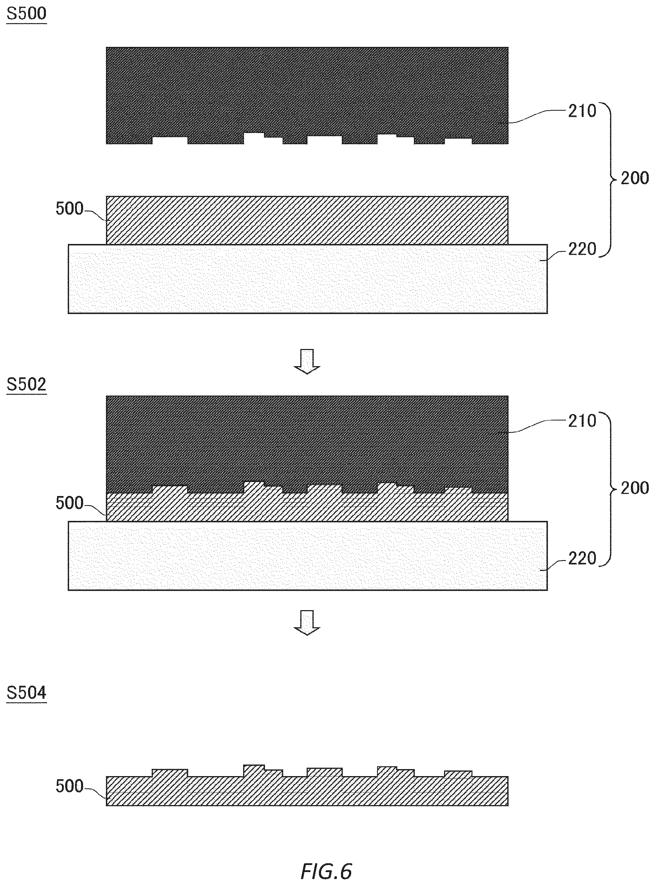

Fig. 6 shows a method of producing a fabric 500 of a comparative example. In step S500, the fabric 500 is prepared. In step S502, the fabric 500 is embossed. In step S504, the fabric 500 is taken out. Unlike the fabric 100, the fabric 500 of the present example does not have the rear surface layer 130 adhered to the front surface layer 110, and thus it is not easy to deeply emboss the fabric 500.

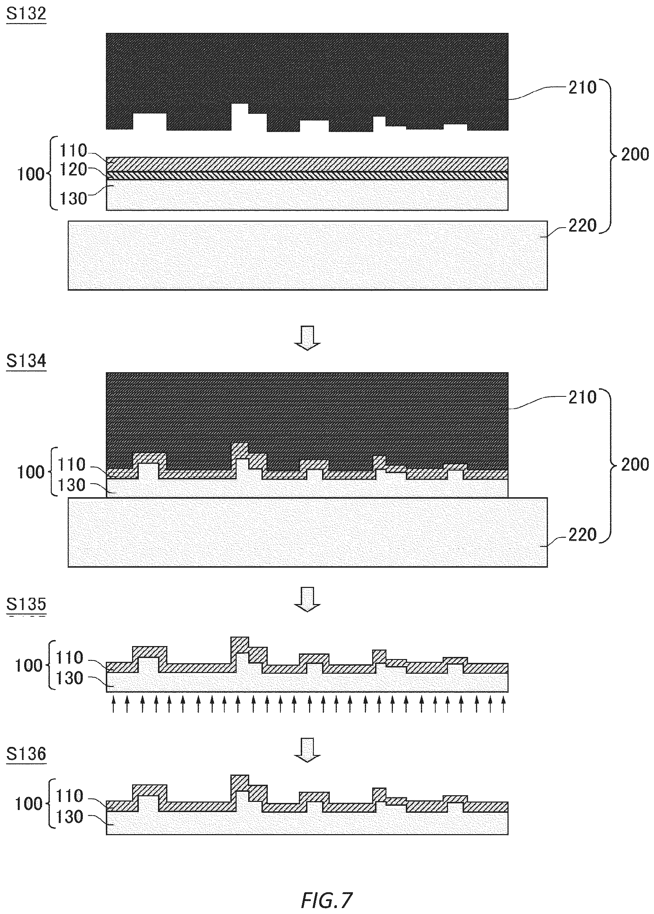

Fig. 7 shows a modified example of the method of producing the fabric 100. The present example includes step S135, which is a difference from the producing method shown in Fig. 5. In the present example, the difference from the producing method shown in Fig. 5 will be particularly described.

In step S135, the rear surface layer 130 is expanded, after the front surface layer 110 is embossed. For example, the rear surface layer 130 is expanded, by heating from a rear surface side of the rear surface layer 130. The expansion of the rear surface layer 130 makes it possible to restore the thickness of the rear surface layer 130 which is compressed during the embossing.

For example, by plastically deforming the front surface layer 110 by the embossing, and elastically deforming the rear surface layer 130 by the embossing, it becomes easy to expand the rear surface layer 130 alone. By heating the rear surface layer 130 by a method in which a front surface layer 110 side is less affected by the heating than the rear surface layer 130, it is possible to expand the rear surface layer 130 while the embossing depth De of the front surface layer 110 is maintained. This makes it possible to restore the rear surface layer 130 which is compressed during the embossing. Even in a case where an embossing mark remains on the rear surface of the rear surface layer 130, flattening is possible by the expansion of the rear surface layer 130.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: warp yarn; 11: first shrinkage yarn; 12: second shrinkage yarn; 100: fabric; 110: front surface layer; 120: adhesive layer; 130: rear surface layer; 200: embossing machine; 210: mold; 220: stand; 500: fabric.

## Claims

1. A leather-like fabric comprising:
a leather-like front surface layer for which at least one of polyester, nylon, acrylic, linen, cotton, silk, rayon, or wool, is used; and
a rear surface layer which is adhered to a rear surface of the front surface layer, wherein
the front surface layer and the rear surface layer are embossed.

2. The leather-like fabric according to claim 1, wherein
an embossing depth of the fabric is 50 µm or more and 400 µm or less.

3. The leather-like fabric according to claim 1, wherein
the rear surface layer is a non-woven fabric for which polyester is used.

4. The leather-like fabric according to claim 1, wherein
a thickness of the rear surface layer is greater than a thickness of the front surface layer.

5. The leather-like fabric according to any one of claims 1 to 4, comprising:
an adhesive layer for adhering the front surface layer and the rear surface layer together.

6. The leather-like fabric according to claim 5, wherein
a material of the adhesive layer contains polyester.

7. The leather-like fabric according to claim 5, wherein
a melting point of the adhesive layer is lower than melting points of the front surface layer and the rear surface layer.

8. A method of producing a leather-like fabric, the method comprising:
bonding a front surface layer and a rear surface layer together; and
embossing the front surface layer in a state in which the front surface layer and the rear surface layer are bonded to each other, wherein
the front surface layer is a leather-like layer for which polyester is used.

9. The method of producing a leather-like fabric according to claim 8, wherein
the embossing includes using an embossing machine which uses a mold of a roll shape or a plate shape, to perform surface heating on the front surface layer.

10. The method of producing a leather-like fabric according to claim 8, wherein
a heating temperature for the embossing is lower than a glass transition temperature of the front surface layer.

11. The method of producing a leather-like fabric according to claim 8, wherein
the embossing includes plastically deforming the front surface layer.

12. The method of producing a leather-like fabric according to claim 8, wherein
the embossing includes elastically deforming the rear surface layer.

13. The method of producing a leather-like fabric according to any one of claims 8 to 12, the method comprising:
expanding the rear surface layer, after embossing the front surface layer.

14. The method of producing a leather-like fabric according to claim 13, wherein
the expanding the rear surface layer includes heating from a rear surface side of the rear surface layer.
